# EUROPÄISCHE PATENTSCHRIFT

(11) **EP 1 327 566 B1**
(45) Veröffentlichungstag und Bekanntmachung des Hinweises auf die Patenterteilung: **11.06.2008**
(21) Anmeldenummer: 02028690.2
(22) Anmeldetag: 21.12.2002
(51) Int. Cl.: B60T 7/12, B60G 17/015, B60T 11/10, B60T 13/74

(54) **Anfahrhilfesteuerungsvorrichtung**
Control device of a start-assist system
Commande pour dispositif d'aide au démarrage

(30) Priorität: 11.01.2002 DE 10200783
(43) Veröffentlichungstag der Anmeldung: 16.07.2003
(73) Patentinhaber: AUDI AG, 85045 Ingolstadt (DE)
(72) Erfinder: Balnus, Christian, 80796 München (DE)
(74) Vertreter: Thielmann, Frank

(56) Entgegenhaltungen:
- EP-A- 0 523 338
- EP-A- 0 812 747
- EP-A- 0 822 129
- WO-A-01/58714
- DE-A- 3 618 532

## Beschreibung

Die Erfindung betrifft eine lemfähige Anfahrhilfesteuerungsvorrichtung zur Verwendung bei einem Fahrzeug mit Motor, insbesondere mit Handschaltgetriebe, mit einer Feststellbremse, insbesondere elektromechanischen oder hydraulischen Feststellbremse, mit einer oder mehreren Erfassungseinrichtungen zum Erfassen von Signalen, einer Auswerteeinheit zum Bilden eines Anfahrwunschsignals und einer Steuereinheit, die bei Auftreten des Anfahrwunschsignals eine Stelleinrichtung derart ansteuert, dass die Feststellbremse gelöst wird.

Bei Fahrzeugen mit konventioneller Handbremse wird diese zur Unterstützung des Anfahrvorgangs am Hang verwendet. Ein Anfahren ohne Unterstützung der Handbremse kann für einen Fahrer schwierig sein. Bei Fahrzeugen mit Fußfeststellbremse wird zum Anfahren am Hang überhaupt keine Unterstützung durch die Bremse gegeben. Es besteht dadurch das Problem, dass der Fahrer motorisch das Betätigen des Gas- und Bremspedals, Kupplungspedals sowie der Handbremse koordinieren muss. Im Stand der Technik ist es beispielsweise aus der DE 44 32 456 A1 bekannt, zum Erleichtern des Anfahrens am Berg und zum Verhindern eines bergabwärts Rollens des Fahrzeugs eine Anfahrhilfevorrichtung vorzusehen, die eine mit dem Kupplungspedal verbundene Einrichtung aufweist, die beim Drücken des Kupplungspedals eine auf die Fahrzeugräder wirkende Bremse mit einem Bremsdruck beschickt und diesen Bremsdruck so bemisst, dass er die Bremse bei gelöster Kupplung betätigt und beim Einrücken der Kupplung zum Lösen der Bremse sich verringert. Der Bremsdruck wird in Abhängigkeit von der Pedalstellung und/oder von dem an der Ausgangsseite der Kupplung übertragenen Drehmoment eingestellt.

EP 0 812 747 beschreibt ein Anfahrhilfesteuerungsvorrichtung gemäß dem Stand der Tecknik zur Anfahrhilfe auf einer geneigten Fahrbahn durch Festhalten und Lösen von druckmittelbetätigten Bremsen eines Kraftfahrzeugs.

Eine weitere Vorrichtung zum erleichterten Berganfahren eines Kraftfahrzeugs ist aus der DE 44 32 456 A1 bekannt. Bei dieser Vorrichtung wird bei gedrücktem Kupplungspedal das Fahrzeug am Abwärtsrollen im ersten Vorwärtsgang und im Rückwärtsgang gehindert und während des Loslassens des Kupplungspedals bei ausreichend eingerückter Kupplung das Berganfahren des Fahrzeugs gestattet. Mit dem Kupplungspedal ist dabei eine Einrichtung verbunden, die in Abhängigkeit von der Stellung des Kupplungspedals und dem Betrieb der Kupplung einen Bremsdruck erzeugt.

Nicht vorgesehen ist hierbei ein Einwirken auf eine Parkbremse. Die Funktion einer elektromechanischen Parkbremse für Kraftfahrzeuge ist aus der DE 197 51 445 A1 bekannt, wobei eine Betätigung nicht nur über einen Handgriff, sondern auch über einen Taster erfolgen kann, wie in der DE 198 54 105 A1 offenbart. Mit Hilfe eines von einem elektronischen Steuergerät gesteuerten Schaltelementes ist bei mindestens einer in dem Steuergerät gespeicherten Schaltdrehzahl die Steuerzeit des Einlassventils gegenüber dem Auslassventil veränderbar. Einen infolge des für die Beeinflussung der Steuerzeiten nötigen Zeitintervalls auftretenden Drehmomenteinbruch vermeidet das Verfahren, indem in Abhängigkeit von der Dynamik, mit der die Motordrehzahl ansteigt, die Schaltdrehzahl um eine Differenzdrehzahl auf den Wert einer optimalen Schaltdrehzahl verschoben wird. Der Wert der Differenzdrehzahl ist in zeitlicher Abhängigkeit von der Zunahme der Motordrehzahl in einem Kennfeld eines Steuergerätes der Brennkraftmaschine gespeichert.

Die im Vorstehenden beschriebenen Anfahrhilfesteuerungsvorrichtungen des Standes der Technik sind zum Teil einerseits zu kompliziert aufgebaut, andererseits können sie nicht individuell angepasst eine Feststellbremse lösen.

Der vorliegenden Erfindung liegt daher die Aufgabe zugrunde, eine Anfahrhilfesteuerungsvorrichtung zur Verwendung bei einem Fahrzeug mit Motor, insbesondere mit Handschaltgetriebe, mit einer Feststellbremse, insbesondere elektromechanischen oder hydraulischen Feststellbremse, dahingehend fortzubilden, dass die Nachteile des Standes der Technik überwunden werden und insbesondere eine sich auf den jeweiligen Fahrer einstellende Anfahrhilfesteuerungsvorrichtung geschaffen wird.

Diese Aufgabe wird durch eine lemfähige Anfahrhilfesteuerungsvorrichtung zur Verwendung bei einem Fahrzeug mit Motor, insbesondere mit Handschaltgetriebe, mit einer Feststellbremse, insbesondere elektromechanischen oder hydraulischen Feststellbremse, gelöst, mit einer oder mehreren Erfassungseinrichtungen zum Erfassen von Signalen, einer Auswerteeinheit zum Bilden eines Anfahrwunschsignals und einer Steuereinheit, die bei Auftreten des Anfahrwunschsignals eine Stelleinrichtung derart ansteuert, dass die Feststellbremse gelöst wird, wobei die Auswerteeinheit ein Anfahrrucksignal des Fahrzeugs zum Bestimmen des Anfahrzeitpunkts auswertet. Weiterbildungen der Erfindung sind in den abhängigen Ansprüchen definiert.

Dadurch wird eine Anfahrhilfesteuerungsvorrichtung geschaffen, bei der nicht nur der Anfahrvorgang am Hang erleichtert wird, da die Anfahrhilfesteuerungsvorrichtung den Anfahrwunsch sicher und eindeutig erkennt, sondern dies auch durch Auswerten weniger Signale ermöglicht wird. Dies sind vorzugsweise diejenigen Signale, die ohnehin an einem CAN-Bus zur Verfügung stehen. Durch das Auswerten des Anfahrrucksignals des Fahrzeugs beim Anfahren gegen eine geschlossene Feststellbremse kann vorteilhaft eine Steuerung des Anfahrvorgangs durch die Anfahrhilfesteuerungsvorrichtung nach individuellem Erfordernis, zugleich auf einfachem Wege und dennoch wirkungsvoll vorgenommen werden.

Besonders bevorzugt wertet die Auswerteeinheit das Signal eines Neigungswinkelsensors auf das Überschreiten eines vorgebbaren Schwellwertes des Gradienten des Neigungswinkels zum Detektieren eines Anfahrrucks aus. Bevorzugt ist also ein Neigungswinkelsensor vorgesehen, dessen Ausgangssignal zum Erkennen des Anfahrwunsches ausgewertet wird oder auswertbar ist. Der Neigungswinkelsensor kann außerdem zum Bestimmen des für das Anfahren notwendigen Motormoments in Abhängigkeit von der Hangneigung verwendet werden. Der Sensor ist bevorzugt hochauflösend, so dass ein Anfahrrucksignal bzw. das Einnicken der Karosserie beim Anfahren gegen eine geschlossene Feststellbremse erkannt und der Lösepunkt entsprechend auf einen früheren oder späteren Zeitpunkt verlegt werden kann. Der Neigungswinkel wird bevorzugt direkt gemessen. Bei rechtzeitigem Öffnen der Feststellbremse, also vollem Öffnen zu dem Zeitpunkt, zu dem das anliegende Radmoment in Fahrtrichtung ein Rückrollen des Fahrzeugs gerade verhindert, wird das Fahrzeug eine Aufbaureaktion wie beim Anfahren ohne Eingriff der Feststellbremse zeigen, somit eine durch die Fahrwerkskinematik und das Fahrwerkskonzept bedingte Reaktion.

Neben dem Anfahrwunschsignal liegt der Auswerteeinheit auch ein Signal über ein zu spätes Öffnen der Bremse vor, nämlich dadurch, dass der Gradient der Reaktion um so höher ist, desto später die Bremse geöffnet wird, wenn die Momentenbilanz ausgeglichen ist bzw. ein Momentenüberschuss des Radmoments in Fahrtrichtung gegenüber dem Radmoment entgegen der angestrebten Fahrtrichtung oder Hangabtriebsmoment vorliegt. Vorzugsweise ist zumindest eine Einrichtung zum Ermitteln von Radmomenten insbesondere der angetriebenen Achse eines Fahrzeugs besonders bevorzugt unter Verwendung des Signals des Neigungswinkelsensors vorgesehen. Um hier gegenzusteuern, also den Gradienten zu reduzieren, erfolgt vorzugsweise eine Anpassung von Öffnungsparametern der Anfahrhilfesteuerungsvorrichtung in einer geeigneten Weise. Die Auswerteeinheit wertet bevorzugt Neigungswinkel und Radmoment der Feststellbremse zum Feststellen eines zu frühen und/oder zu späten Öffnens der Feststellbremse aus. Über mehrere Anfahrvorgänge hinweg kann so ein Lerneffekt der Anfahrhilfesteuerungsvorrichtung erzielt werden, wodurch der Fahrer das Anfahren als optimal wahrnimmt. Hierdurch kann vorteilhaft eine lemfähige Anfahrhilfesteuerungsvorrichtung zur Verbesserung des Anfahrvorgangs, individuell abgestimmt auf den jeweiligen Fahrer, vorgesehen werden. Vorteilhaft kann hierdurch auch die Lebensdauer des Fahrzeugs erhöht werden, da beispielsweise dessen Kupplung durch optimale Betätigung geschont wird.

Öffnungsparameter der Anfahrhilfevorrichtung sind bevorzugt zum Optimieren der Anfahrsituation eines Fahrzeugs in Abhängigkeit des Signals des Neigungswinkelsensors anpassbar. Diese umfassen vorteilhaft den Zeitpunkt des Öffnens der Bremse, die Stellung des Kupplungspedals und/oder Gaspedals, die Stellgeschwindigkeit zum Lösen der Feststellbremse. Die Anpassung dieser Öffnungsparameter wird durch die Auswerteeinheit der Anfahrhilfesteuerungsvorrichtung vorgenommen. Eine Anpassung der Öffnungsparameter der Anfahrhilfesteuerungsvorrichtung erfolgt vorzugsweise dahingehend, dass eine rucklose Fahrzeugbewegung und ein Öffnen der Feststellbremse bei Erreichen eines für die Fahrzeugbewegung ausreichenden Radmoments in Fahrtrichtung ermöglicht ist. Üblicherweise muss ein Fahrzeugentwickler bzw. Hersteller eine Parametrisierung für jede Motor- bzw. Getriebevariante separat entwickeln, was sehr aufwendig ist. Der Anfahrkomfort ist dennoch nicht für alle Fahrertypen optimal. Über die Lebensdauer des Fahrzeugs hinweg kann eine Änderung dieser Parameter erforderlich werden, was jedoch nach Herstellung eines Fahrzeugs nicht mehr möglich ist. Durch die Verwendung eines Neigungswinkelsensors in Verbindung mit einer Auswerteeinheit mit Anpassung der Öffnungsparameter kann über die Fahrzeuglebensdauer hinweg somit bei jedem Fahrertypus eine optimale Anpassung und ein optimaler Komfort der Anfahrhilfe geschaffen werden. Außerdem ist der Entwicklungsaufwand, nämlich die Parametrisierung und Applikation, der Anfahrhilfesteuerungsvorrichtung durch eine entsprechende Auswertung des Neigungswinkelsensorsignals zur Erkennung eines Anfahrrucks bzw. zu frühen Öffnens einer Feststellbremse und ein separates Anpassen an ein jeweiliges individuelles Anfahrverhalten eines Fahrers sowohl bei Fahrzeugen mit Automatikgetriebe als auch bei Fahrzeugen mit Handschaltgetriebe vorteilhaft möglich bzw. wird von der Vorrichtung selbständig durchgeführt.

Grundsätzlich ist es aus der DE 197 20 846 A1 bekannt, den Nick- und Rollwinkel eines Kraftfahrzeugs zu bestimmen. Gemäß dieser Druckschrift wird ein Neigungswinkel gegenüber der Fahrzeugunterfläche durch Radarstrahlen gemessenen und der Neigungswinkel zwischen jeweils zwei Mikrowellensensoren ermittelt, die die Neigung des Fahrzeugs in bezug auf die Achsen + 45° und - 135° bzw. - 45° und + 135° beschreiben. Für die Zwecke der vorliegenden Erfindung wird der Neigungswinkel jedoch vorzugsweise nicht gegenüber der Fahrbahnoberfläche, sondern gegenüber der Achse der Erdschwerkraft ermittelt, da beim Anfahren am Hang diese Größe sich als relevant erweist.

Vorzugsweise ermittelt die Steuereinheit bei Vorliegen eines sich über einen vorgebbaren Schwellwert ändernden Gradienten des Neigungswinkels ein zum Anfahren erforderliches und/oder optimales Motorsollmoment in Abhängigkeit von dem Signal des Neigungswinkelsensors und gibt dies einer Motorregeleinrichtung auf. Bevorzugt ändert die Steuereinheit die Öffnungsparameter so, dass bei Anstieg des Neigungswinkelsensor-Signals in einem kurzen Zeitintervall und bei Vorliegen des Gaspedalbetätigungssignals die Stellung des Kupplungspedals in Richtung zum Einkuppeln verändert und die Stellgeschwindigkeit der Bremsdrucksteuerung und/oder des Motors der Feststellbremse erhöht wird. Zur Optimierung des Anfahrvorgangs ist vorzugsweise eine Verstellbarkeit, Aktualisierbarkeit und abrufbare Speicherung der Öffnungsparameter der Feststellbremse insbesondere über mehrere Anfahrvorgänge hinweg vorsehbar oder vorgesehen. Dies geschieht vorzugsweise so lang, bis kein Überschreiten des Schwellwertes mehr auftritt und der Anfahrvorgang von dem Fahrer als optimal erachtet wird.

Bevorzugt fragt die Auswerteeinheit zum Anpassen des Anfahrvorgangs in Richtung früheres Öffnen ein Momentenüberschusssignal oder ein Signal einer ausgeglichenen Momentenbilanz zwischen Radmoment in Fahrtrichtung und Radmoment entgegen der Fahrtrichtung und ein Überschreiten des vorgebbaren Schwellwertes des Gradienten des Neigungswinkels ab. Zum Anpassen des Anfahrvorgangs in Richtung späteres Öffnen der Feststellbremse hingegen fragt die Auswerteeinheit vorzugsweise das Unterschreiten und/oder Erreichen bzw. das Nicht-Überschreiten des Schwellwertes des Gradienten des Neigungswinkels ab, verzögert das Öffnen der Feststellbremse und nimmt so lange ein Verstellen der Öffnungsparameter vor, bis ein Überschreiten des Schwellwertes vorliegt. Dies kann auch im Rahmen mehrerer Anfahrvorgänge geschehen. Insbesondere bei Erkennen eines ordnungsgemäßen Anfahrvorgangs, also bei nicht vorliegender Überschreitung des Schwellwerts des Gradienten des Neigungswinkels, nimmt die Vorrichtung einen Ausgleich in Richtung zum späteren Öffnen der Feststellbremse vor, so lange, bis die Feststellbremse bei erhöhtem Gradienten des Schwellwertes bei ausgeglichener Momentenbilanz oder Momentenüberschuss am Rad in Fahrtrichtung noch nicht vollständig geöffnet ist. Dann wird bevorzugt einmalig noch eine Korrektur in Richtung früheres Öffnen vorgenommen.

Zur näheren Erläuterung der Erfindung werden im folgenden Ausführungsbeispiele anhand der Zeichnungen näher beschrieben. Diese zeigen in:
- Figur 1: eine Prinzipskizze einer ersten Ausführungsform einer erfindungsgemäßen Anfahrhilfesteuerungsvorrichtung,
- Figur 2: eine Detailansicht einer erfindungsgemäßen Auswerteeinheit und
- Figur 3: ein Ablaufschema einer Ausführungsform einer erfindungsgemäßen Auswertung und Öffnungszeitpunkts-Anpassung der Feststellbremse.

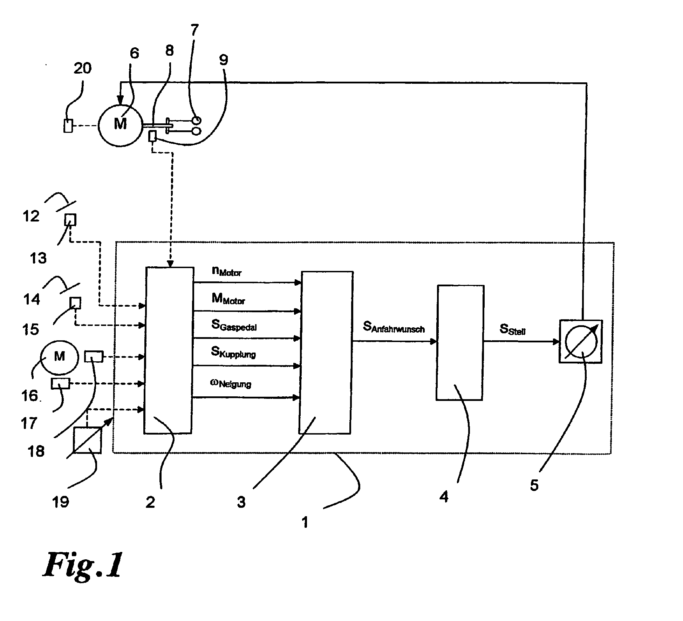

Figur 1 zeigt eine Prinzipskizze einer ersten Ausführungsform einer erfindungsgemäßen Anfahrhilfesteuerungsvorrichtung 1 mit einer Erfassungseinrichtung 2 zum Erfassen von Signalen, einer Auswerteeinheit 3, einer Steuereinheit 4 und einer Stelleinrichtung 5, die durch die Steuereinheit ansteuerbar ist. Die Stelleinrichtung 5 wirkt auf einen Motor 6 einer elektromechanischen Feststellbremse 7 ein, der über einen Spindelantrieb 8 die Feststellbremse anziehen oder lösen kann. Die jeweilige Position des Spindelantriebs 8 wird über einen Positionssensor 9 abgefragt. Anstelle einer elektromechanischen Feststellbremse kann beispielsweise auch eine hydraulische vorgesehen sein.

Der Erfassungseinrichtung 2 werden neben den Signalen des Sensors 9 noch die Signale eines die Stellung eines Kupplungspedals 12 erfassenden Sensors 13, eines die Stellung eines Gaspedals 14 erfassenden Sensors 15, eines das Motormoment M_{Motor} eines Antriebsmotors 16 eines Fahrzeugs, für das die Anfahrhilfesteuerungsvorrichtung 1 verwendet wird, erfassenden Sensors 17, eines die Motordrehzahl n_{Motor} des Motors 16 erfassenden Sensors 18 und eines den Neigungswinkel ω_{Neigung} des Fahrzeugs erfassenden Neigungswinkelsensors 19 zugeführt. Die empfangenen Signale leitet sie an die Auswerteeinheit 3 weiter. Diese kann entweder alle oder lediglich einen Teil von diesen zum Bilden eines Anfahrwunschsignals S_{Anfahrwunsch} verwenden, das der Steuereinheit 4 aufgegeben wird. Diese bildet ihrerseits ein Stellsignal S_{Stell}, das der Stelleinrichtung aufgegeben wird, um den Motor 6 der Feststellbremse 7 zu betätigen und diese damit zu lösen oder anzuziehen.

Die Auswerteeinheit kann überprüfen, ob das Gaspedal 14 betätigt wird, also ein Gaspedalbetätigungssignal S_{Gaspedal} vorliegt. Der von einem Neigungswinkelsensor 19 gemessene Neigungswinkel wird zum Feststellen eines Anfahrrucks herangezogen durch Bilden des Gradienten des Neigungswinkels und Überprüfen, ob der ermittelte Wert einen vorgegebenen Schwellwert überschreitet. Ist dies der Fall, liegt ein Anfahrruck vor und der Öffnungszeitpunkt der Feststellbremse kann als unzureichend eingestuft und verbessert werden. Eine solche Verbesserung kann in dem Verschieben des Öffnungszeitpunkts der Feststellbremse auf einen früheren oder späteren Zeitpunkt bestehen. Der Neigungswinkelsensor kann auch zum Bestimmen des für das Anfahren notwendigen Motormoments in Abhängigkeit von der Hangneigung herangezogen werden.

Die elektromechanische Feststellbremse wird vorzugsweise über einen Zweiwegetaster 20 betätigt, der auf den Motor 6 einwirkt und über den die Feststellbremse geöffnet oder geschlossen werden kann. Das Öffnen der Bremse kann jedoch außerdem über die Anfahrhilfesteuerungsvorrichtung erfolgen.

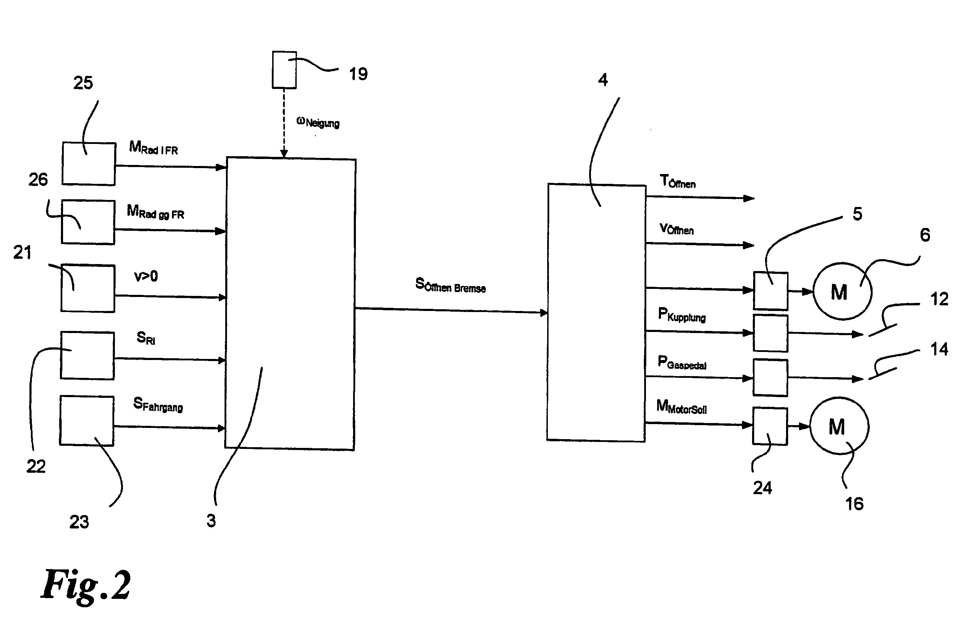

In Figur 2 ist eine Detailansicht einer weiteren Ausführungsform der Auswerteeinheit 3 dargestellt. Von einem Bewegungssensor 21 erhält die Auswerteeinheit dabei eine Information darüber, ob sich das Fahrzeug bewegt. Ein Richtungssensor 22 gibt ein Bewegungsrichtungssignal S_{Ri} an, ein Fahrgangsensor 23, ob bzw. ggf. welcher Fahrgang eingelegt ist. Außerdem empfängt die Auswerteeinheit von dem Neigungswinkelsensor 19 Neigungswinkelsignale ω_{Neigung}. Momentenaufnehmer 25 und 26 an zumindest einem Rad des Fahrzeugs nehmen das Moment in Fahrtrichtung und entgegen der Fahrtrichtung des Fahrzeugs auf. Neben der Auswerteeinheit 3 ist in Figur 2 die Steuereinheit 4 gezeigt, die von der Auswerteeinheit die zum Ansteuern der elektromechanischen Feststellbremse 7 und/oder des Kupplungspedals 12 und/oder des Antriebsmotors 16 des Fahrzeugs erforderlichen Signale eines vorliegenden Anfahrwunsches S_{Anfahrwunsch} und/oder eines Öffnens der Bremse S_{Öffnen Bremse} erhält. Zum Feststellen eines zu späten Öffnens der Bremse 7 wird von der Auswerteeinheit das Vorliegen des Neigungswinkelsignals für die Feststellung, ob ein Anfahren am Hang erforderlich ist und durch Bilden des Gradienten dieses Signals und Ermitteln oder Abfragen des Radmoments und Bilden einer Momentenbilanz zwischen Radmoment in Fahrtrichtung und entgegen der Fahrtrichtung bzw. Hangabtriebsmoment bei Vorliegen einer Fahrzeuggeschwindigkeit v>0 ausgewertet. Zum Ermitteln, ob eine Anfahrhilfe überhaupt erforderlich ist, wird vorzugsweise der Fahrgang abgefragt, ebenso die Fahrtrichtung. Zunächst stellt die Auswerteeinheit fest, ob grundsätzlich ein Anfahrwunsch vorliegt oder lediglich ein Fahrzeug am Hang abgestellt wurde, jedoch ein Fahrwunsch nicht vorliegt. Anschließend stellt die Auswerteeinheit fest, ob eine Anfahrhilfe erforderlich ist, ermittelt den gewünschten bzw. besten Anfahrzeitpunkt aus dem Anfahrrucksignal und gibt in diesem Falle ein Öffnungssignal für die Feststellbremse an die Steuereinheit 4 ab.

Zum Anpassen und Optimieren der Anfahrhilfesteuerungsvorrichtung an die individuelle Anfahrsituation eines Fahrzeugs in Abhängigkeit von der Neigung des Fahrzeugs können Öffnungsparameter der Feststellbremse eingestellt werden. Die Optimierung oder Anpassung besteht darin, die Fahrzeugbewegung rucklos zu gestalten und die elektromechanische Feststellbremse bis zum Erreichen einer für die Fahrzeugbewegung in der durch den gewählten Fahrgang vorgegebenen Richtung erforderlichen Gaspedalbetätigung geschlossen zu halten. Als Öffnungsparameter sind in Figur 2 der Zeitpunkt des Öffnens T_{Öffnen} der Feststellbremse, die Geschwindigkeit des Öffnens der Feststellbremse v_{Öffnen} und die Stellung des Kupplungspedals 12 und/oder Gaspedals 14. Ein Einwirken ist dabei auf den Motor 6 der Feststellbremse 7 sowie eine Motorregeleinrichtung 24 des Antriebsmotors 16 möglich. Die Steuereinheit 4 ändert die Öffnungsparameter so, dass bei einem Anstieg des Neigungswinkels des Fahrzeugs in einem kurzen Zeitintervall durch Einnicken des Fahrzeugs beim Anfahren gegen die geschlossene Feststellbremse 7, also bei gleichzeitiger Gaspedalbetätigung, die Stellung des Kupplungspedals in Richtung zum Einkuppeln verändert wird. Außerdem wird die Stellgeschwindigkeit des Motors 6 der Feststellbremse 7 erhöht, um diese schneller zu lösen. Alternativ oder zusätzlich kann auch z.B. die Stellgeschwindigkeit der Bremsdrucksteuerung erhöht werden.

Alternativ oder zusätzlich zu den vorstehenden Maßnahmen kann ein Neigungswinkel-Schwellwert vorgegeben werden, bei dessen Überschreiten die Steuereinheit ein zum Anfahren erforderliches oder optimales Motorsollmoment für den Antriebsmotor 16 ermittelt. Dieses wird der Motorregeleinrichtung 24 zum Regeln des Motormoments und der Motordrehzahl aufgegeben.

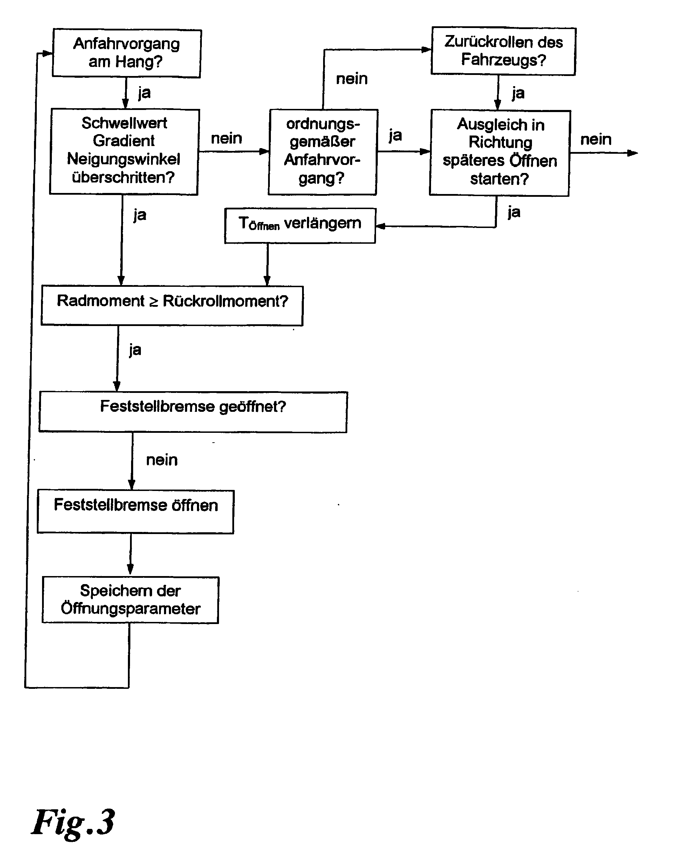

In Figur 3 ist ein möglicher Ablauf des Abfragevorgangs in der Auswerteeinheit dargestellt. Hierbei wird zunächst abgefragt, ob ein Anfahrvorgang an einem Hang vorliegt. Bejahendenfalls wird dann überprüft, ob ein vorgegebener Schwellwert des Gradienten des Neigungswinkels überschritten wird. Ist dies der Fall, wird anschließend überprüft, ob das Radmoment in Fahrtrichtung größer oder gleich dem Moment am Rad entgegen der Fahrtrichtung des Fahrzeugs ist. Ist dies ebenfalls gegeben, wird abgefragt, ob die Feststellbremse bereits geöffnet wurde. Dies könnte beispielsweise durch die Steuereinheit 4 oder aber ggf. durch manuelle Betätigung bereits erfolgt sein. Ist die Feststellbremse noch geschlossen, wird sie geöffnet. Außerdem werden die neuen Öffnungsparameter gespeichert, die sich gegebenenfalls gegenüber zuvor gespeicherten geändert haben, um bei dem nächsten Anfahrvorgang die neuen Öffnungsparameter wieder abfragen und den neuen Anfahrvorgang darauf stützen zu können. Hierdurch ist eine Optimierung des Anfahrvorgangs möglich. Der geschilderte Vorgang ermöglicht eine Korrektur der Öffnungszeitpunkts der Feststellbremse zu einem früheren Zeitpunkt hin.

Wird der Schwellwert des Gradienten des Neigungswinkels nicht überschritten, wird festgestellt, ob ein ordnungsgemäßer Anfahrvorgang vorliegt. Es ist somit grundsätzlich nicht notwendig, eine Korrektur der Öffnungsparameter der Feststellbremse vorzunehmen. Allerdings kann trotz des sich nach außen als ordnungsgemäß darstellenden Anfahrvorgangs eine Korrektur zu einem späteren Zeitpunkt hin sinnvoll sein. Um dies feststellen zu können, kann ein Ausgleich in Richtung späteres Öffnen gestartet werden, wie auch in Figur 3 gezeigt. Ein solcher Ausgleich kann auch gestartet werden, wenn ein Momentenüberschuss am Rad entgegen der angestrebten Fahrtrichtung vorliegt, also das Fahrzeug zurückrollt, was sich auch schon durch die Nichtordnungsmäßigkeit des Anfahrvorgangs andeutet.

Nach dem Starten eines Ausgleichs in Richtung späteres Öffnen der Feststellbremse wird zunächst der Öffnungszeitpunkt T_{Öffnen} nach hinten verschoben, also T_{Öffnen} verzögert. Anschließend wird ebenfalls das Vorliegen eines größeren oder gleichen Radmoments in Fahrtrichtung im Vergleich zum Moment am Rad entgegen der angestrebten Fahrtrichtung überprüft und sofern dies gegeben ist, abgefragt, ob die Feststellbremse bereits geöffnet ist. Ist dies nicht der Fall, wird das Öffnen der Feststellbremse veranlasst, und die aktuellen Öffnungsparameter werden gespeichert. Beim nächsten Anfahrvorgang am Hang wird dann festgestellt, ob das Verschieben des Öffnungszeitpunkts nach hinten zu einem optimaleren Ergebnis geführt hat, also der Fahrer das Gefühl eines maximalen Anfahrkomforts hat. Dies zeigt sich durch Vorliegen eines optimalen Anfahrvorgangs, also u.a. eines Nicht-Überschreitens des vorgegebenen Schwellwertes des Gradienten des Neigungswinkels beim Anfahrvorgang. Das Fahrzeug bäumt sich nicht auf.

Die Anfahrhilfesteuerungsvorrichtungen können sowohl bei Fahrzeugen mit Automatikgetriebe als auch bei solchen mit Handschaltung verwendet werden. Der Entwicklungsaufwand in Form der Parametrisierung und Applikation der Anfahrhilfesteuerungsvorrichtung kann mit der erfindungsgemäßen Lösung vorteilhaft reduziert werden.

Neben den im Vorstehenden beschriebenen und in den Figuren dargestellten Ausführungsbeispielen sind noch zahlreiche weitere möglich, bei denen jeweils eine Anfahrhilfesteuerungsvorrichtung zum Lösen einer Feststellbremse eines Fahrzeugs so ausgebildet ist, dass ein Anfahrwunschsignal gebildet wird unter Auswerten des Neigungswinkels des Fahrzeugs bzw. insbesondere eines Anfahrrucks.

### Bezugszeichenliste

- 1: Anfahrhilfesteuerungsvorrichtung
- 2: Erfassungseinrichtung
- 3: Auswerteeinheit
- 4: Steuereinheit
- 5: Stelleinrichtung
- 6: Motor
- 7: elektromechanischen Feststellbremse
- 8: Spindelantrieb
- 9: Positionssensor
- 12: Kupplungspedal
- 13: Sensor
- 14: Gaspedal
- 15: Sensor
- 16: Antriebsmotor
- 17: Sensor
- 18: Sensor
- 19: Neigungswinkelsensor
- 20: Zweiwegetaster
- 21: Bewegungssensor
- 22: Richtungssensor
- 23: Fahrgangsensor
- 24: Motorregeleinrichtung
- 25: Momentenaufnehmer am Rad (in Fahrtrichtung)
- 26: Momentenaufnehmer am Rad (gegen Fahrtrichtung)
- M_{Motor}: Motordrehmoment
- n_{Motor}: Motordrehzahl
- ω_{Neigung}: Neigungswinkel
- S_{Anfahrwunsch}: Anfahrwunschsignal
- S_{Stell}: Stellsignal
- P_{Gaspedal}: Gaspedalstellung
- S_{Gaspedal}: Gaspedalbetätigungssignal
- S_{Kupplung}: Kupplungssignal
- P_{Kupplung}: Kupplungspedalstellung
- M_{Rad i FR}: Radmoment in Fahrtrichtung
- M_{Rad gg FR}: Radmoment gegen Fahrtrichtung
- v: Fahrzeuggeschwindigkeit
- S_{Öffnen Bremse}: Signal Bremse öffnen
- T_{Öffnen}: Öffnungszeitpunkt
- v_{Öffnen}: Öffnungsgeschwindigkeit
- S_{Ri}: Bewegungsrichtungssignal

## Patentansprüche

1. Lernfähige Anfahrhilfesteuerungsvorrichtung (1) zur Verwendung bei einem Fahrzeug mit Motor (16), insbesondere mit Handschaltgetriebe, mit einer Feststellbremse (7), insbesondere elektromechanischen oder hydraulischen Feststellbremse, mit einer oder mehreren Erfassungseinrichtungen (2) zum Erfassen von Signalen, einer Auswerteeinheit (3) zum Bilden eines Anfahrwunschsignals (S_{Anfahrwunsch}) und einer Steuereinheit (4), die bei Auftreten des Anfahrwunschsignals eine Stelleinrichtung (5) derart ansteuert, dass die Feststellbremse (7) gelöst wird, wobei die Auswerteeinheit (3) ein Anfahrrucksignal des Fahrzeugs zum Bestimmen des Anfahrzeitpunkts auswertet

2. Vorrichtung nach Anspruch 1,
**dadurch gekennzeichnet, dass**
die Auswerteeinheit (3) das Signal eines Neigungswinkelsensors (19) auf das Überschreiten eines vorgebbaren Schwellwertes des Gradienten des Neigungswinkels zum Detektieren des Anfahrrucksignals auswertet

3. Vorrichtung nach Anspruch 1 oder 2,
**dadurch gekennzeichnet, dass**
zumindest eine Einrichtung zum Ermitteln von Radmomenten (M_{Rad I FR}, M_{Rad gg FR}) insbesondere der angetriebenen Achse eines Fahrzeugs vorgesehen ist.

4. Vorrichtung nach einem der vorstehenden Ansprüche,
**dadurch gekennzeichnet, dass**
die Auswerteeinheit Neigungswinkel (ω_{Neigung}) und Radmoment (M_{Rad}) zum Feststellen eines zu frühen und/oder zu späten Öffnens der Feststellbremse auswertet.

5. Vorrichtung nach Anspruch 4,
**dadurch gekennzeichnet, dass**
Öffnungsparameter der Anfahrhilfesteuerungsvorrichtung (1) zum individuellen Optimieren der Anfahrsituation eines Fahrzeugs in Abhängigkeit vom Signal des Neigungswinkelsensors (19) anpassbar sind.

6. Vorrichtung nach Anspruch 5,
**dadurch gekennzeichnet, dass**
Öffnungsparameter den Zeitpunkt (T_{Öffnen}) des Öffnens der Bremse, die Stellung (P_{Kupplung}) des Kupplungspedals (12) und/oder die Stellung (P_{Gaspedal}) des Gaspedals (14), die Stellgeschwindigkeit zum Lösen der Feststellbremse (7) umfassen.

7. Vorrichtung nach Anspruch 5 oder 6,
**dadurch gekennzeichnet, dass**
eine Anpassung dahingehend erfolgt dass die Fahrzeugbewegung rucklos und die Feststellbremse bei Erreichen eines für die Fahrzeugbewegung ausreichenden Radmoments in Fahrtrichtung öffenbar ist

8. Vorrichtung nach einem der vorstehenden Ansprüche,
**dadurch gekennzeichnet, dass**
die Steuereinheit (4) bei Vorliegen eines sich über einen vorgebbaren Schwellwert ändernden Gradienten des Neigungswinkels (ω_{Neigung}) ein zum Anfahren erforderliches und/oder optimales Motorsollmoment in Abhängigkeit von dem Signal des Neigungswinkelsensors (19) ermittelt und einer Motorregeleinrichtung (25) aufgibt.

9. Vorrichtung nach einem der vorstehenden Ansprüche,
**dadurch gekennzeichnet, dass**
zur Optimierung des Anfahrvorgangs eine Verstellbarkeit, Aktualisierbarkeit und abrufbare Speicherung der Öffnungsparameter der Feststellbremse insbesondere über mehrere Anfahrvorgänge hinweg vorsehbar oder vorgesehen ist.

10. Vorrichtung nach einem der vorstehenden Ansprüche,
**dadurch gekennzeichnet, dass**
die Auswerteeinheit zum Anpassen des Anfahrvorgangs in Richtung früheres Öffnen ein Momentenüberschusssignal oder ein Signal einer ausgeglichenen Momentenbilanz zwischen Radmoment in Fahrtrichtung und Radmoment gegen Fahrtrichtung und ein Überschreiten des vorgebbaren Schwellwertes des Gradienten des Neigungswinkels abfragt.

11. Vorrichtung nach einem der vorstehenden Ansprüche,
**dadurch gekennzeichnet, dass**
die Auswerteeinheit zum Anpassen des Anfahrvorgangs in Richtung späteres Öffnen der Feststellbremse das Unterschreiten und/oder Erreichen des Schwellwertes des Gradienten des Neigungswinkels abfragt und so lange ein Verstellen der Öffnungsparameter der Feststellbremse vornimmt, bis ein Überschreiten des Schwellwertes vorliegt.

## Claims

1. Learning-capable starting aid control device (1) for use in a vehicle with an engine (16), particularly having manual gear change, having a parking brake (7), in particular an electromechanical or hydraulic parking brake, having one or more sensing devices (2) for detecting signals, an evaluating unit (3) for forming a desired starting signal (S_{Anfahrwunsch}) and a control unit (4) which, on arrival of the desired starting signal, controls an adjusting device (5) such that the parking brake (7) is released, wherein the evaluating unit (3) evaluates a starting jolt signal from the vehicle to determine the starting time point.

2. Device according to claim 1, **characterised in that** the evaluating unit (3) evaluates the signal of an inclination angle sensor (19) for exceeding a predetermined threshold value of the gradient of the inclination angle in order to detect the starting jolt signal.

3. Device according to claim 1 or 2, **characterised in that** at least one device for determining the wheel torques (M_{Rad i FR}, M_{Rad gg FR}), in particular, of the driven axle of a vehicle.

4. Device according to one of the preceding claims, **characterised in that** the evaluating unit evaluates the inclination angle (ω_{Neigung}) and wheel torque (M_{Rad}) in order to detect the too early or too late releasing of the parking brake.

5. Device according to claim 4, **characterised in that** release parameters of the starting aid control device (1) are adaptable for individual optimisation of the starting situation of a vehicle depending on the signal from the inclination angle sensor (19).

6. Device according to claim 5, **characterised in that** release parameters comprise the time point (T_{Öffnen}) of release of the brake, the position (P_{Kupplung}) of the clutch pedal (12) and/or the position (P_{Gaspedal}) of the accelerator pedal (14), the control speed for releasing the parking brake (7).

7. Device according to claim 5 or 6, **characterised in that** an adjustment takes place such that the vehicle movement is jerk-free and the parking brake can be released on reaching a wheel torque sufficient for the vehicle movement in the driving direction.

8. Device according to one of the preceding claims, **characterised in that**, given a gradient of the inclination angle (ω_{Neigung}) changing above a predetermined threshold value, the control unit (4) issues a required and/or optimum target engine torque for starting, depending on the signal from the inclination angle sensor (19) and issues said torque to an engine regulating device (25).

9. Device according to one of the preceding claims, **characterised in that**, in order to optimise the starting procedure, storage of the release parameters for the parking brake with the capability for adjustment, updating and looking-up, in particular over a plurality of starting procedures, can be or is provided.

10. Device according to one of the preceding claims, **characterised in that**, in order to adjust the starting procedure in the direction of earlier release, the evaluating unit enquires regarding a torque overshoot signal or a signal for an equalised torque balance between the wheel torque in the driving direction and the wheel torque against the driving direction and regarding overshooting of the predeterminable threshold value of the gradient of the inclination angle.

11. Device according to one of the preceding claims, **characterised in that**, for adjustment of the starting procedure in the direction of later release of the parking brake, the evaluating unit enquires regarding undershooting and/or reaching the threshold value of the gradient of the inclination angle and undertakes adjustment of the release parameters for the parking brake until the threshold value is overshot.

## Revendications

1. Dispositif de commande d'aide au démarrage (1) adaptatif pour l'utilisation dans un véhicule doté d'un moteur (16), notamment d'une boîte manuelle, d'un frein de stationnement (7), en particulier d'un frein de stationnement électromécanique ou hydraulique, d'un ou de plusieurs dispositifs de détection (2) servant à détecter des signaux, d'une unité d'évaluation (3) pour former un signal de souhait de démarrage (S_{Souhait} de _{démarrage}) et d'une unité de commande (4) qui commande lors de l'apparition du signal de souhait de démarrage un dispositif de commande (5) de sorte à desserrer le frein de stationnement (7), l'unité d'évaluation (3) évaluant un signal de secousse de démarrage du véhicule pour déterminer le moment de démarrage.

2. Dispositif selon la revendication 1, **caractérisé en ce que** l'unité d'évaluation (3) évalue le signal d'un détecteur d'angle d'inclinaison (19) par rapport au dépassement d'une valeur seuil prescriptible du gradient de l'angle d'inclinaison afin de détecter le signal de secousse de démarrage.

3. Dispositif selon la revendication 1 ou 2, **caractérisé en ce qu'**au moins un dispositif est prévu pour déterminer les couples de roue (M_{Roue i FR}, M_{Roue gg FR}), notamment de l'essieu de roues motrices d'un véhicule.

4. Dispositif selon l'une quelconque des revendications précédentes, **caractérisé en ce que** l'unité d'évaluation évalue l'angle d'inclinaison (ω_{Inclinaison}) et le couple de roue (M_{Roue}) afin de déterminer une ouverture précoce et/ou tardive du frein de stationnement.

5. Dispositif selon la revendication 4, **caractérisé en ce que** des paramètres d'ouverture du dispositif de commande d'aide au démarrage (1) peuvent être adaptés pour l'optimisation individuelle de la situation de démarrage d'un véhicule en fonction du signal du détecteur d'angle d'inclinaison (19).

6. Dispositif selon la revendication 5, **caractérisé en ce que** les paramètres d'ouverture comprennent le moment (T_{Ouverture}) de l'ouverture du frein, la position (P_{Embrayage}) de la pédale d'embrayage (12) et/ou la position (P_{Pédale d'accélérateur}) de la pédale d'accélérateur (14), la vitesse de réglage pour desserrer le frein de stationnement (7).

7. Dispositif selon la revendication 5 ou 6, **caractérisé en ce qu'**une adaptation se produit en ce sens que le mouvement de véhicule est sans secousse et le frein de stationnement peut être ouvert lors de l'atteinte d'un couple de roue suffisant pour le mouvement de véhicule dans le sens de la marche.

8. Dispositif selon l'une quelconque des revendications précédentes, **caractérisé en ce que** l'unité de commande (4) détermine, lors de la présence d'un gradient se modifiant au-dessus d'une valeur seuil prescriptible, de l'angle d'inclinaison (ω_{Inclinaison}) , un couple moteur de consigne nécessaire au démarrage et/ou optimal en fonction du signal du détecteur d'angle d'inclinaison (19) et le transmet à un dispositif de régulation du moteur (25).

9. Dispositif selon l'une quelconque des revendications précédentes, **caractérisé en ce que**, pour l'optimisation du processus de démarrage, on prévoit ou on peut prévoir une possibilité de réglage, d'actualisation et une mémorisation pouvant être appelée, des paramètres d'ouverture du frein de stationnement, notamment au-delà de plusieurs processus de démarrage.

10. Dispositif selon l'une quelconque des revendications précédentes, **caractérisé en ce que** l'unité d'évaluation interroge, pour adapter le processus de démarrage dans le sens d'une ouverture plus tôt, un signal de couple excédentaire ou un signal d'un bilan de couple compensé entre le couple de roue dans le sens de la marche et le couple de roue dans le sens inverse de la marche et un dépassement de la valeur seuil prescriptible du gradient de l'angle d'inclinaison.

11. Dispositif selon l'une quelconque des revendications précédentes, **caractérisé en ce que** l'unité d'évaluation interroge, pour adapter le processus de démarrage dans le sens d'une ouverture plus tardive du frein de stationnement, le dépassement et/ou l'atteinte de la valeur seuil du gradient de l'angle d'inclinaison et entreprend un réglage des paramètres d'ouverture du frein de stationnement jusqu'à atteindre un dépassement de la valeur seuil.
